# EUROPÄISCHE PATENTSCHRIFT

(11) **EP 1 841 556 B1**
(45) Veröffentlichungstag und Bekanntmachung des Hinweises auf die Patenterteilung: **11.03.2009**
(21) Anmeldenummer: 05813959.3
(22) Anmeldetag: 02.12.2005
(51) Int. Cl.: B23C 3/00, B22D 13/10

(54) **HOCHISOLIERENDE UND FEUERFESTE BESCHICHTUNGSMASSEN FÜR GIESSFORMEN**
HIGHLY INSULATING AND FIREPROOF COATING MATERIALS FOR CASTING MOULDS
MATIERES DE REVETEMENT HAUTEMENT ISOLANTES ET IGNIFUGES POUR MOULES

(30) Priorität: 16.12.2004 DE 102004060649
(43) Veröffentlichungstag der Anmeldung: 10.10.2007
(73) Patentinhaber: Ashland-Südchemie-Kernfest GmbH, 42489 Wülfrath (DE)
(72) Erfinder: STÖTZEL, Reinhard, 46325 Borken (DE); PITAMITZ, Herbert, 42113 Wuppertal (DE); LEDERER, Gernot, 76275 Ettlingen (DE)
(74) Vertreter: Vossius & Partner
(86) Internationale Anmeldenummer: PCT/EP2005/012917
(87) Internationale Veröffentlichungsnummer: WO 2006/063696

(56) Entgegenhaltungen:
- EP-A- 0 589 051
- EP-A- 0 806 258

## Beschreibung

Die vorliegende Erfindung betrifft Beschichtungsmassen oder Schlichtezusammensetzungen, welche eine Lösungsmittelkomponente und eine Feststoffkomponente umfassen, wobei die Feststoffkomponente Metakaolinit und Pyrophyllit umfasst, die auf Gießformen aufgebracht werden können, diese Schlichtezusammensetzungen umfassende Gießformen und die Verwendung derselben insbesondere in Schleudergießverfahren und Großgussverfahren.

Durch Gießen werden Schmelzflüssigwerkstoffe in geometrisch bestimmte Gegenstände mit bestimmten Werkstückeigenschaften überführt. Die meisten Erzeugnisse der Eisen- und Stahlindustrie sowie die Werkstoffe der Nichteisenmetallindustrie durchlaufen Gießprozesse zur ersten Formgebung. Voraussetzung für die Herstellung von Gussstücken ist unter anderem die Anfertigung von zum Teil sehr komplizierten Gießformen zur Aufnahme der Schmelze. Die Gießformen werden unterteilt in verlorene Formen, die meist aus einem mineralischen, feuerfesten, körnigen Grundstoff mit einem Bindemittel sowie oft noch verschiedenen weiteren Zusätzen, z.B. zur Erzielung guter Gussoberflächen, bestehen und nach jedem Guss zerstört werden, und Dauerformen, mit denen jeweils eine große Anzahl von Gussteilen hergestellt werden kann. Für verlorene Formen werden als feuerfeste, körnige Grundsubstanz überwiegend gewaschener, klassierter Quarzsand, in bestimmten Fällen auch Chromit-, Zirkon- und Olivinsand verwendet. Daneben werden noch Formstoffe auf Schamott- sowie Magnesit-, Sillimanit-, Korundbasis u.a. benutzt. Die Bindemittel für die Formsande können anorganischer oder organischer Natur sein. Verlorene Formen werden überwiegend aus Bentonit-gebundenen Formstoffen für kleinere Formen oder Kunstharz-gebundenen Formstoffen für größere Formen hergestellt, die zur Erzielung einer ausreichenden Standfestigkeit mechanisch verdichtet werden müssen. Als Formwerkstoff für Dauerformen haben sich je nach Anwendungsbereich besonders Gusseisen sowie unlegierte und legierte Stähle, aber auch Kupfer, Aluminium, Graphit, Sintermetalle und keramische Materialien bewährt. Zu den Dauerformverfahren zählen das Kokillen-, Druck-, Schleuder- und Stranggießverfahren.

Ein Verfahren zur Herstellung von Gießformen und Kernen aus kunstharzgebundenem Formsand umfasst beispielsweise das Herstellen einer Grundform bzw. eines Grundkerns aus dem Formsand und das Aufbringen einer feuerfeste anorganische Bestandteile enthaltenden Formbeschichtung, welche auch Schlichte genannt wird, zumindest auf diejenigen Oberflächen der/des Grundform/Grundkerns, die mit dem gegossenen Metall in Berührung kommen. Die Formbeschichtungen haben zum einen den Zweck, die Formteiloberfläche zu beeinflussen, das Gussstückaussehen zu verbessern, das Gussstück metallurgisch zu beeinflussen und/oder Gussfehler zu vermeiden. Ferner haben diese Beschichtungen oder Schlichten die Funktion, die Form vom flüssigen Metall beim Gießen chemisch zu isolieren, wodurch jegliche Haftung verhindert und die spätere Trennung von Form- und Gussteil ermöglicht wird. Darüber hinaus gewährleistet die Schlichte eine thermische Trennung von Form- und Gussstück. Wenn diese Funktion nicht erfüllt wird, wird z.B. eine Metallform im Laufe der aufeinanderfolgenden Gießvorgänge solchen thermischen Belastungen ausgesetzt, dass sie vorzeitig zerstört wird. Die Wärmeübertragung kann gezielt genutzt werden, um das Abkühlen des Gussstücks zu beeinflussen. Zur Herstellung von Metallteilen, beispielsweise aus Gusseisen, werden unter anderem das Großgussverfahren und das Schleudergussverfahren, eingesetzt. Beim Großgussverwahren herrschen enorme metallostatische Drucke auf Form und Kern, die auch sehr lange Zeit der Temperaturbelastung ausgesetzt werden. Darum übernimmt die Schlichte insbesondere bei diesem Verfahren eine sehr exponierte Schutzfunktion, um ein Eindringen des Metalls in den Formsand (Penetration), Reißen der Kerne (Blattrippen) oder Reaktion mit dem Formsand (Vererzungen) zu vermeiden. Beim Schleuderguss wird das Gießmetall in eine um ihre Achse rotierende, rohr- oder ringförmige Kokille gefüllt, in der es unter Einwirkung der Zentrifugalkraft zu z.B. Büchsen, Ringen und Rohren geformt wird. Es ist unbedingt notwendig, dass das Gussstück vor dem Entformen vollständig verfestigt ist, so dass eine ziemlich lange Kontaktzeit zwischen Form- und Gussstück erforderlich ist. In diesem Fall wird die Form mit einer isolierenden Schlichte in Form eines einschichtigen oder mehrschichtigen Überzugs beschichtet.

Die üblicherweise verwendeten Schlichten enthalten als Grundstoffe z.B. Tone, Quarz, Kieselgur, Cristobalit, Tridymit, Aluminiumsilikat, Zirkonsilikat, Glimmer, Schamotte und auch Koks und Graphit. Diese Grundstoffe sind der zweckbestimmende Anteil der Schlichten, welche die Formoberfläche bedecken und die Poren gegen das Eindringen des Gießmetalls schließen.

Aufgrund ihres großen Isoliervermögens werden häufig Produkte aus Siliziumdioxid und Kieselgur bevorzugt, da ihre Herstellungskosten gering und ihre Verfügbarkeit gut ist.

Zur Zeit gibt es 3 verschiedene Verfahren, um Schleudergussrohre zu fertigen: Ein Verfahren verwendet eine Pulverschlichte, basierend auf Impfmittel und Grafit, manchmal mit Anteilen an Aluminium. Diese Schlichte wird mit Hilfe von einem aufgeschnittenen und mit der Pulverschlichte gefüllten Rohr durch Drehen in der rotierenden Kokille verteilt. Ein weiteres Verfahren verwendet eine Fertigschlichte, basierend auf Wasserbasis mit den Feuerfeststoffen Zirkonsilikat, Aluminiumsilikat und/oder Aluminumoxid. Diese Schlichte wird aus einem Druckkessel mit einer Sprühlanze mit Sprüh- oder Flutdüse in einem oder mehreren Durchgängen auf die heiße rotierende Kokille gesprüht. Ein weiteres Verfahren verwendet eine angesetzte Wasserschlichte aus Füllstoffen, bestehend aus kalziniertem Kieselgur (wie z.B. die Handelsprodukte Celite, Dicalite) mit Bentonit und Wasser.

Schleudergussschlichten, die heutzutage im Wesentlichen verwendet werden, basieren auf Kieselgur. Die Drehbewegung der Form bei Schleudergussverfahren und die Nachbearbeitung des Gussstücks führen jedoch häufig dazu, dass ein Teil der Schlichte in die Umgebung gelangt. Staubformen von Kieselgur, gebranntem Kieselgur und Produkten, die beim Brennen von Kieselgur entstehen, wie z.B. Cristobalit-haltiger Feinstaub, werden mittlerweile als silikose- und auch als krebserzeugend eingestuft. Hierdurch entsteht ein hohes Gefährdungspotenzial für Mitarbeiter an den Arbeitsplätzen. Deshalb besteht ein großer Bedarf nach einem anderen hochisolierenden und zugleich feuerfesten Beschichtungsmaterial für Formbeschichtungen.

EP-B-0 806 258 beschreibt ein Verfahren zum Herstellen einer isolierenden Beschichtung für Metallformen zum Gießen eisenhaltiger Metalle, wobei auf die Oberfläche der Form zumindest eine Grundbeschichtung aufgebracht wird, und wobei eine Deckbeschichtung auf der Grundbeschichtung aufgebracht wird, wobei die Deckbeschichtung Metakaolin enthält und bei jedem Gussvorgang komplett oder teilweise erneuert wird. Die reine Verwendung von Metakaolin beim Schleudergussverfahren führte jedoch zu Rohrklemmern und die Rohre ließen sich nicht ausreichend ziehen.

FR-A-2 829 048 beschreibt eine Schlichtezusammensetzung, umfassend Wasser, Metakaolin, aktiviertes Natrium- oder Kalziumbentonit, neutralisierte Koprafettsäure, einen ethoxylierten Fettalkohol und ethoxyliertes Nonylphenol. Das Ziehen der Rohre aus der Kokille mit einer derartigen Zusammensetzung erweist sich häufig als äußerst schwierig.

Es war daher eine der vorliegenden Erfindung zugrundeliegende Aufgabe, eine Schlichtezusammensetzung bereitzustellen, welche im Wesentlichen kein Kieselgur enthält und welche zu guten Ergebnissen, insbesondere im Schleudergießverfahren und Großgussverfahren, führt.

Ein Aspekt der vorliegenden Erfindung betrifft Schlichtezusammensetzungen (Beschichtungsmassen) für Gießformen, umfassend eine Lösungsmittelkomponente und eine Feststoffkomponente, wobei die Feststoffkomponente als Hauptbestandteil ein Gemisch aus Metakaolinit und Pyrophyllit umfasst. Vorzugsweise enthält diese Schlichtezusammensetzung weniger als 5 Gew.-%, stärker bevorzugt weniger als 3 Gew.-%, noch stärker bevorzugt weniger als 1 Gew.-%, bezogen auf alle Bestandteile der Schlichtezusammensetzung, und besonders bevorzugt kein Kieselgur. In weiteren bevorzugten Ausführungsformen umfasst die Feststoffkomponente der erfindungsgemäßen Schlichtezusammensetzung ein Gemisch aus Metakaolinit und Pyrophyllit im Verhältnis von 1:3 bis 20:1; vorzugsweise 1:1 bis 14:1, stärker bevorzugt 1:1 bis 10:1, noch stärker bevorzugt 2:1 bis 6:1, und am meisten bevorzugt im Verhältnis von 2:1 bis 5:1.

Eine weitere bevorzugte Ausführungsform der erfindungsgemäßen Schlichtezusammensetzung umfasst ferner mindestens einen weiteren Bestandteil, ausgewählt aus Bentonit und Hectorit. Gegebenenfalls kann die erfindungsgemäße Schlichte ferner Bindemittel, Netzmittel, Entschäumer, Pigmente, Farbstoffe und Biozide umfassen.

Ein weiterer Aspekt der vorliegenden Erfindung betrifft Gießformen, umfassend eine Deckbeschichtung auf mindestens einem Teil der Oberflächen der Gießformen, die mit dem Gießmetall in Berührung kommen, welche durch Auftragen und Trocknen einer erfindungsgemäßen Schlichtezusammensetzung hergestellt wurde. In einer weiteren Ausführungsform einer Gießform ist die erfindungsgemäße Deckbeschichtung auf einer Grundbeschichtung und gegebenenfalls auf weiteren grundbeschichtungsfreien Oberflächenteilen der Gießform aufgebracht, wobei in einer bevorzugten Ausführungsform die Grundbeschichtung ebenfalls aus einer erfindungsgemäßen Schlichtezusammensetzung erhalten wurde.

Ein weiterer Aspekt der vorliegenden Erfindung betrifft Schleudergießverfahren und Großgussverfahren, welche Gießformen verwenden, welche mindestens eine Deckbeschichtung aufweisen, die aus einer erfindungsgemäßen Schlichtezusammensetzung erhalten wurde.

Ein weiterer Aspekt der vorliegenden Erfindung betrifft ein Verfahren zur Herstellung einer Gießform. In einer Ausführungsform wird zur Herstellung einer Deckbeschichtung einmal oder mehrmals eine Schicht einer erfindungsgemäßen Schlichtezusammensetzung auf mindestens einen Oberflächenteil oder auf die gesamte Oberfläche der Gießform, die mit dem Gießmetall in Berührung kommen, aufgebracht und getrocknet. In einer anderen Ausführungsform wird auf die Oberfläche der Gießgrundform oder auf Teile der Oberfläche davon zuerst mindestens eine Schicht einer Grundbeschichtung aufgetragen, und die Schlichtezusammensetzung zur Herstellung der Deckbeschichtung wird anschließend auf diese Grundbeschichtung und gegebenenfalls weiteren Teilen der Oberfläche der Gießgrundform aufgebracht und getrocknet. In einer weiteren Ausführungsform wird zur Herstellung der Grundbeschichtung ebenfalls eine erfindungsgemäße Schlichtezusammensetzung verwendet, wobei die Zusammensetzung der Schlichtezusammensetzung zur Herstellung der Grundbeschichtung gleich oder verschieden zu der der Schlichtezusammensetzung zur Herstellung der Deckbeschichtung sein kann. Häufig werden zirkonsilikathaltige Schlichten für Grundbeschichtungen verwendet, die gegebenenfalls auch durch eine verstärkte Penetrationsneigung in den Untergrund einen zusätzlichen Schutz der Gießgrundform bilden.

In bevorzugten Ausführungsformen werden die erfindungsgemäßen Gießformen zur Herstellung von Rohren, Zylinderlaufbuchsen, Motoren- und Motorkomponenten, Maschinenbetten und Turbinen verwendet.

Die vorliegende Erfindung beruht auf der überraschenden Erkenntnis, dass die erfindungsgemäßen Schlichtezusammensetzungen, welche eine Feststoffkomponente enthalten, die als Hauptbestandteil ein Gemisch aus Metakaolinit und Pyrophyllit umfassen, zu ähnlich guten und besseren Gießergebnissen führen wie Schlichtezusammensetzungen, dessen Feststoffkomponente als Hauptbestandteil Kieselgur enthält. Vorteile der erfindungsgemäßen Schlichte gegenüber Kieselgur enthaltenden Schlichten im Schleuderguss sind insbesondere Gesundheits-, Sicherheits- und Kennzeichnungseffekte. Von Metakaolinit und Pyrophyllit ist das für Kieselgur beschriebene hohe Gefährdungspotential nicht bekannt. Hierzu kommt, dass kieselgurhaltige Stoffe unter Umständen als gesundheitsgefährdend gekennzeichnet werden müssen und dass Kieselgur, welches z.B. von Gussstücken abgebürstet oder abgestahlt wird, zukünftig nur noch als Sondermüll zu entsorgen ist. Das erfindungsgemäße Gemisch hat ferner den Vorteil, dass es aufgrund seiner chemischen Zusammensetzung feuerfest und inert ist. Im Großguss führt ein Metakaolinit/Pyrophyllit-Gemisch gegenüber Zirkonschlichten und auch reinen Pyrophyllitschlichten durch die Reaktivität, von Metakaolinit mit dem Pyrophyllit und die Feuerfestigkeit und Feinkörnigkeit (Imprägnierung der Sandhohlräume) des Metakaolinits zu hervorragenden Eigenschaften. Insbesondere die hohen Isolierwerte des Pyrophyllit/Metakaolinitgemisches bewirken einen sehr guten Schutz gegen sogenannte Blattrippen, die häufig bei Quarzsand durch die thermische Ausdehnung des Quarzsandes (Quarzsprung) und die unzureichenden thermischen Festigkeiten insbesondere bei Polyurethan-Coldbox Kernen festzustellen sind.

Kaolinit ist ein triklines Zweischicht-Tonmineral und der Hauptbestandteil der Kaoline. Die Entwässerung von Kaolinit führt in Abhängigkeit von Teilchengröße, Ordnungsgrad, Erhitzungsdauer und Wasserdampfpartialdruck zu Metakaolinit. Kaolinit spaltet bei etwa 450°C und darüber das Wasser aus seinen Hydroxylgruppen ab. Unter dem Ausdruck "Metakaolinit" wird im Zusammenhang mit der vorliegenden Erfindung ein Material verstanden, das aus natürlichem Kaolin erhalten wurde, aus welchem in einer bevorzugten Ausführungsform im Wesentlichen alle Verunreinigungen entfernt wurden und welches bei einer Temperatur im Bereich von 750-950°C erhitzt wurde, um das Konstitutionswasser im Wesentlichen vollständig, vorzugsweise vollständig, zu entfernen. Geeignete Metakaolinit-Materialien sind z.B. im Handel unter der Produktbezeichnung Satintone von der Firma Engelhard Cooperation, Iseli, USA erhältlich.

Vorzugsweise wird in der vorliegenden Erfindung Metakaolinit mit einer spezifischen Oberfläche nach BET von mindestens 10 m²/g, vorzugsweise mindestens 25 m²/g, gemessen nach DIN 66131, verwendet. Das Metakaolinit sollte einen Glühverlust von weniger als 3 Gew.-%, vorzugsweise weniger als 1 Gew.-%, gemessen gemäß DIN 38414, aufweisen. Bevorzugte Metakaolinit-Materialien besitzen ein unverdichtetes Schüttgewicht von 100-300 g/l, vorzugsweise 150-200 g/l, gemessen gemäß DIN 53194. In einer weiteren bevorzugten Ausführungsform weist das Metakaolinit eine hohe spezifische Oberfläche, ausgedrückt in Ölabsorption, gemessen gemäß DIN 53109, zwischen 50 und 120%, vorzugsweise zwischen 85 und 120% auf. Das Metakaolinitpulver besitzt vorzugsweise eine Korngröße von 0,05 bis 20 µm, stärker bevorzugt 0,1 bis 10 µm, und hat eine mittlere Korngröße im Bereich von vorzugsweise 1 bis 5 µm.

Unter dem Ausdruck "Pyrophyllit", welcher in der vorliegenden Erfindung im Gemisch mit Metakaolinit verwendet wird, wird in der folgenden Beschreibung ein Material verstanden, das aus natürlichen Pyrophyllit-haltigen Erzen verschiedener Abbaugebiete erhalten wird. Das verwendete Pyrophyllit-Material hat einen Pyrophyllitgehalt von mindestens 40%, vorzugsweise mindestens 50% und stärker bevorzugt mindestens 60%. Auch "Roseki", Agalmatolith und das als "wonderstone" bezeichnete Erz mit über 90% Pyrophyllit sind verwendbar. Viele der im Handel erhältlichen Pyropyllittmaterialien können in der vorliegenden Erfindung eingesetzt werden. Das verwendete Pyrophyllitmaterial kann, falls gewünscht, vorab durch übliche Reinigungsverfahren gereinigt werden, um Begleitmineralien und Verunreinigungen zu entfernen. Vorzugsweise wird das Pyrophyllitrohmaterial vor der Verwendung aufbereitet. Eine bevorzugte Aufbereitung ist das Vermahlen des Rohmaterials auf speziellen Mühlen, was zu Pyrophyllit mit einer plättchenförmigen Struktur führt. Ein anderes Aufbereitungsverfahren ist ein "Abhobeln" von Pyrophylittplättchen von Pyrophyllitrohstoffen. Durch übliche Trennverfahren, wie Sieben, Windsichten usw.,. kann das aufbereitete Pyrophyllitmaterial gegebenenfalls klassifiziert werden. Dabei können gegebenenfalls auch unerwünschte Begleitmineralien abgetrennt werden. Die Plättchen des aufbereiteten Pyrophyllits weisen vorzugsweise eine mikroskopisch bestimmte Größe von 10-100 µm und eine Dicke von 1-10 µm auf. Ein Beispiel für eine in der Erfindung verwendbare Pyrophyllit-Form ist die Pyrax RG-Serie, z.B. Pyrax RG 140 und Pyrax RG 200, die von der Firma R.T.Vanderbilt Company Inc., Norwalk, USA, im Handel erhältlich ist. Eine besonders bevorzugte Pyrophyllitform weist eine Härte nach Mohs von 1-2, eine Dichte von 2,8-2,9 g/cm³, und ein PCE (ASTM C-24) von 27-28 auf. Durch die Verwendung von groben Körnungen kann der Anteil an Nebenbestandteilen des Pyrophyllits gering gehalten werden, die zu unerwünschten Wirkungen führen. Durch diese Maßnahme wird beispielsweise der Anteil an Nebenbestandteilen wie Quartz und Glimmer minimiert, die zu einer geringeren Feuerfestigkeit des Materials führen.

In einer bevorzugten Ausführungsform weist der zu verwendende Pyrophyllit einen Aspekt (Längen-zu-Dicke-Verhältnis) von mindestens 5, vorzugsweise 10-30, auf. Vorzugsweise wird ein Pyropyllit mit einem unverdichteten Schüttgewicht von 300-600 g/l, vorzugsweise 300-400 g/l, gemessen gemäß DIN 53194, verwendet. Das bevorzugte Pyrophyllitmaterial hat eine Stampfdichte von 800-1800 kg/m³, vorzugsweise 900-1550 kg/m³ (DIN 55943). Das bevorzugte Pyrophyllitmaterial weist eine Korngröße von 5-600 µm, vorzugsweise 10-300 µm, stärker bevorzugt 10-200 µm, auf. Ferner weist das bevorzugte Pyrophyllitmaterial eine Schrumpfung von maximal 2%, vorzugsweise maximal 1%, auf. In der vorliegenden Erfindung wird der Pyrophyllit in hydratisierter Form verwendet, d.h. das natürlicherweise vorhandene Hydratwasser wird nicht durch Erhitzen oder Glühen des Pyrophyllitmaterials vor der verwendung entfernt. Es ist jedoch auch die Verwendung von Pyrophyllitmaterialien möglich, die vor der Verwendung teilweise oder vollständig dehydratisiert wurden.

Die Schlichtezusammensetzung der vorliegenden Erfindung umfasst eine Feststoffkomponente, deren Hauptbestandteil aus einem Gemisch aus Metakaolinit und Pyrophyllit besteht. In diesem Gemisch liegt Metakaolinit zu Pyrophyllit im Verhältnis von vorzugsweise 1:3 bis 20:1, vorzugsweise 1:1 bis 14:1, stärker bevorzugt 1:1 bis 10:1, noch stärker bevorzugt 2:1 bis 6:1, und am meisten bevorzugt im Verhältnis von 2:1 bis 5:1, vor. Die erfindungsgemäße Schlichtezusammensetzung enthält vorzugsweise weniger als 5 Gew.%, stärker bevorzugt weniger als 2 Gew.-%, noch stärker bevorzugt weniger als 1 Gew.-% und insbesondere bevorzugt kein Kieselgur.

In einer bevorzugten Ausführungsform der erfindungsgemäßen Schlichtezusammensetzung umfasst die Feststoffkomponente zusätzlich Bentonit, Hectorit oder ein Gemisch davon. Der Gehalt an Bentonit, Hectorit oder ein Gemisch davon beträgt üblicherweise 0,1-10 Gew.-%, vorzugsweise 0,1-5 Gew.-%, und stärker bevorzugt 0,3-3 Gew.-%, bezogen auf alle Bestandteile der Zusammensetzung.

Die Schlichtezusammensetzung gemäß der vorliegenden Erfindung kann ferner gegebenenfalls zusätzlich weitere, üblicherweise verwendete Zwei-Schicht-Silikate und Drei-Schicht-Silikate, wie z.B. Attapulgit, Serpentine, Kaoline, Smektite, wie Saponit, Montmorillonit, Beidellit und Nontronit, Vermiculit, Illit und Glimmer, in kleineren Mengen, z.B. 0,5-4,0 Gew.-%, vorzugsweise 1,0-2,0 Gew.-%, enthalten.

Die erfindungsgemäße Schlichtezusammensetzung kann gegebenenfalls eine oder mehrere weiter Komponenten; wie z.B. Bindemittel, Netzmittel, Entschäumer, Pigmente, Farbstoffe und Biozide, enthalten.

Die Aufgabe eines Bindemittels liegt vor allem darin, nach dem Trocknen der auf eine Gießform aufgebrachten Schlichte ein Binden der Inhaltsstoffe der Schlichtezusammensetzung, einschließlich Metakaolinit und Pyrophyllit, zu ermöglichen. Vorzugsweise härtet das Bindemittel irreversibel aus und ergibt somit eine abriebfeste Beschichtung auf der Gießform. Die Abriebfestigkeit ist für die fertige Beschichtung von großer Bedeutung, da die Beschichtung bei mangelnder Abriebfestigkeit beschädigt werden kann. Insbesondere sollte das Bindemittel durch Luftfeuchtigkeit nicht rückerweichen. In bevorzugten Ausführungsformen wird eine Härtung des Bindemittels in an sich bekannter Weise durchgeführt. Zum Beispiel kann bei Acrylatsystemen eine Härtung unter Verwendung von Radikalbildnern, die z.B. unter der Bestrahlung von UV-Licht Radikale bilden, durchgeführt werden. Erfindungsgemäß können alle Bindemittel verwendet werden, die konventionell in wässrigen und/oder Wasser-Alkohol-Systemen Anwendung finden. Als Bindemittel können beispielsweise Stärke, Dextrin, Peptide, Polyvinylalkohol, Polyvinylacetatcopolymere, Polyacrylsäure, Polystyrol, Polyvinylacetat-Polyacrylatdispersionen und Gemische davon eingesetzt werden. In einer bevorzugten Ausführungsform der Erfindung besteht das Bindemittel aus einer Dispersion eines Alkydharzes, welches sowohl in Wasser als auch in niedrigen Alkoholen, wie Ethanol, Propanol und Isopropanol, löslich ist. Beispiele für Alkydharze sind unmodifizierte wasserdispergierbare Alkydharze, basierend auf einem Naturöl oder deren Fettsäuren mit Polyalkoholen, wie sie beispielsweise in US 3,442,835 beschrieben sind, oder Isocyanat-modifizierte Alkydharze, wie sie beispielsweise in US 3,639,315 beschrieben und welche bevorzugt sind, oder Epoxid-Urethan-modifizierte Alkydharze gemäß DE 43 08 188. Beispielsweise sind Produkte der Necowelreihe von ASK GmbH, 40721 Hilden, Deutschland, verwendbar. Weitere bevorzugte Bindemittel sind Polyvinylalkohole und Polyvinylacetatcopolymere. Die Bindemittel werden vorzugsweise in einer Menge von 0,1-5 Gew.-%, stärker bevorzugt 0,5-2 Gew.-%, bezogen auf alle Bestandteile der Schlichtezusammensetzung, verwendet.

Als Netzmittel können vorzugsweise dem Fachmann bekannte anionische und nicht-anionische Tenside mittlerer und hoher Polarität (HSB-Wert von 7 und höher) eingesetzt werden. Ein Beispiel für ein Netzmittel, das in der vorliegenden Erfindung verwendet werden kann, ist Dinatrium-dioctylsulfosuccinat. Die Netzmittel werden vorzugsweise in einer Menge von 0,01-1 Gew.-%, stärker bevorzugt von 0,05-0,3 Gew.-%, bezogen auf alle Bestandteile der Schlichtezusammensetzung, verwendet.

Entschäumer oder Antischaummittel werden verwendet, um bei der Herstellung der erfindungsgemäßen Schlichtezusammensetzung und beim Auftragen derselben eine Schaumbildung zu verhindern. Schaumbildung beim Auftragen der Schlichtezusammensetzung kann zu einer ungleichmäßigen Schichtdicke und zu Löchern in der Beschichtung führen. Als Entschäumer können beispielsweise Silikon- oder Mineralöl verwendet werden. In der vorliegenden Erfindung werden Entschäumers in einer Menge von von 0,01-1 Gew.-%, stärker bevorzugt von 0,05-0,3 Gew.-%, verwendet. In der erfindungsgemäßen Schlichtezusammensetzung können gegebenenfalls üblicherweise verwendete Pigmente und Farbstoffe verwendet werden. Diese werden gegebenenfalls zugesetzt, um einen anderen Kontrast, z.B. zwischen verschiedenen Schichten, zu erreichen beziehungsweise einen stärkeren Trenneffekt der Schlichte vom Guss zu bewirken. Beispiele für Pigmente sind rotes und gelbes Eisenoxid sowie Graphit. Beispiele für Farbstoffe sind handelsübliche Falbstoffe wie die Luconyl Farbreihe von BASF. Die Farbstoffe und Pigmente werden üblicherweise in einer Menge von 0,01-10 Gew.-%, vorzugsweise von 0,1-5 Gew.-%, verwendet.

Schlichtezusaminensetzungen, deren Lösungsmittelkomponente hauptsächlich aus Wasser besteht, sogenannten Wasserschlichten, werden üblicherweise Biozide zugegeben, um einen bakteriellen Befall zu verhindern und damit einen negativen Einfluss auf die Rheologie und die Bindekraft der Bindungsmittel zu vermeiden. Beispiele für zu verwendende Biozide sind Formaldehyd, 2-Methyl-4-isothiazolin-3-on (MIT), 5-Chlor-2-methyl-4-isothiazolin-3-on (CIT) und 1,2-Benzisothiazolin-3-on (BIT). Vorzugsweise werden MIT, BIT oder ein Gemisch davon eingesetzt. Die Biozide werden üblicherweise in einer Menge von 0,01-0,5 Gew.-% oder von 10-1000 ppm, vorzugsweise von 50-500 ppm, verwendet.

Die Lösungsmittelkomponente der erfindungsgemäßen Schlichtezusammensetzung umfasst Wasser oder einen oder mehrere flüchtige, vorzugsweise aliphatische Alkohole oder Gemische aus Alkohol(en) und Wasser und gegebenenfalls als weitere Komponente ein oder mehrere organische, flüchtige Lösungsmittel, welche sich von obigen Alkoholen unterscheiden. Schlichtezusammensetzungen, deren Lösungsmittel hauptsächlich aus Wasser besteht, werden üblicherweise Wasserschlichten genannt, Schlichtezusammensetzung, deren Lösungsmittel hauptsächlich aus Alkohol oder Alkoholgemischen besteht, werden Alkoholschlichten genannt. In einer Ausführungsform der vorliegenden Erfindung umfasst die Lösungsmittelkomponente 0-100 Gew.-%, vorzugsweise 20-80 Gew.-%, stärker bevorzugt 60-40 Gew.-%, Wasser, und als weitere Komponente 0-100 Gew.-%, vorzugsweise 40-60 Gew.-%, eines oder mehrerer flüchtiger Alkohole, bezogen auf alle Komponenten der Lösungsmittelkomponente. Die Erfindung ist sowohl für reine Wasserschlichten als auch für reine Alkoholschlichten als auch für Wasser/Alkohol-Gemische und für Wasserschlichten, die mit Alkohol verdünnt werden können, verwendbar. Beispiele für bevorzugte Alkohole sind aliphatische C₁-C₅-Alkohole. Beispiele für bevorzugte C₁-C₅-Alkohole sind Methanol, Ethanol, n-Propanol und Isopropanol. Vorzugsweise werden als flüchtige Alkohole Ethanol, Isopropanol und Gemische davon verwendet. Zusätzlich können gegebenenfalls weitere organische, flüchtige Lösungsmittel, vorzugsweise in kleinen Mengen, verwendet werden. Beispiele hierfür sind Essigsäurealkylester wie Essigsäureethylester und Essigsäurebutylester, und Ketone wie Aceton und Methylethylketon.

In einer bevorzugten Ausführungsform umfasst eine erfindungsgemäße Schlichtezusammensetzung 10-40 Gew.-% Metakaolinit, 5-20 Gew.-% Pyrophyllit und 10-85 Gew.-% Wasser, bezogen auf alle Bestandteile der .Zusammensetzung. Eine weitere bevorzugte Ausführungsform einer erfindungsgemäßen Schlichtezusammensetzung umfasst folgende Bestandteile: 15-40 Gew.-% Metakaolinit, 7-20 Gew.% Pyrophyllit, 0,1-5 Gew.-% Bentonit, Hectorit oder ein Gemisch davon, 0,5-2 Gew.-% Bindemittel, 0,01-0,5 Gew.-% Biozid und 10-78 Gew.-% Wasser. Es ist auch möglich, Schlichtezusammensetzungen herzustellen, deren Lösungsmittelkomponente zunächst nur aus Wasser besteht. Durch Verdünnen mit einem Alkohol oder einem Alkoholgemisch können diese Schlichten als Alkoholschlichten verwendet werden. Vorzugsweise werden hierbei Ethanol, Propanol, Isopropanol und Gemische davon verwendet.

Die erfindungsgemäßen Schlichtezusammensetzungen werden nach üblichen Verfahren hergestellt. Beispielsweise wird eine erfindungsgemäße Schlichtezusammensetzung hergestellt, indem ein Großteil der Gesamtmenge der Lösungsmittelkomponente, vorzugsweise die gesamte Menge der Lösungsmittelkomponente, z.B. die gesamte Wassermenge, vorgelegt und hierin Tonminerale wie Bentonit und Hectorit durch Verwendung eines hochscherenden Rührers (z.B. 400-2000 U/min) aufgeschlossen werden. Anschließend werden die Feuerfestkomponenten, beispielsweise erst Metakaolinit, dann Pyrophyllit, Pigmente und Farbstoffe eingerührt, bis eine homogene Mischung entsteht. Die Reihenfolge der Zugabe spielt hierbei keine oder nur eine untergeordnete Rolle, die dann von einem Fachmann leicht festgestellt werden kann. Zum Schluss werden Netzmittel, Antischaummittel, Biozide und Bindemittel eingerührt. Die Schlichtezusammensetzungen werden bei einer Temperatur von vorzugsweise 5-50°C, stärker bevorzugt 10-30°C, mit einer Rührerdrehzahl von vorzugsweise 400-2000 U/min, stärker bevorzugt 1000-1500 U/min, und mit einer Rührerzahnscheibe mit vorzugsweise d/D=0,3-0,7, stärker bevorzugt d/D=0,4-0,6, hergestellt.

Für den kommerziellen Betrieb kann eine erfindungsgemäße Schlichtezusammensetzung als gebrauchsfertig formulierte Beschichtungsmasse, z.B. als gebrauchsfertige Schlichte, hergestellt und vertrieben werden. Ferner kann die erfindungsgemäße Schlichte in konzentrierter Form hergestellt und vertrieben werden. Im letzteren Falle muss zur Bereitstellung einer gebrauchsfertigen Schlichte die geeignete Menge der Lösungsmittelkomponente zugegeben werden, die nötig ist, um die erforderlichen Viskositäts- und Dichteeigenschaften der Schlichte einzustellen. Darüber hinaus ist denkbar, die erfindungsgemäße Schlichtezusammensetzung in Form eines Kits (Mehrkomponentenpackung, die zwei oder mehrere Behältnisse für unterschiedliche Komponenten enthält) bereitzustellen und zu vertreiben, wobei z.B. die Feststoffkomponente und die Lösungsmittelkomponente nebeneinander in getrennten Behältnissen vorliegen. Die Feststoffkomponente kann dabei als pulverförmiges Feststoffgemisch in einem separaten Behältnis vorliegen. Gegebenenfalls zu verwendende weitere flüssige Komponenten, wie z.B. Bindemittel, Netzmittel, Entschäumer, Pigmente, Farbstoffe und Biozide, können in diesem Kit wiederum in einem oder mehreren getrennten Behältnissen vorliegen. Die Lösungsmittelkomponente kann entweder die gegebenenfalls zusätzlich zu verwendenden Komponenten umfassen, z.B. in einem gemeinsamen Behältnis, oder sie kann getrennt von weiteren optionalen Bestandteilen in einem separaten Behältnis vorhanden sein. Zur Herstellung einer gebrauchsfertigen Schlichte werden die geeigneten Mengen der Feststoffkomponente, der optionalen weiteren Komponenten und der Lösungsmittelkomponente miteinander vermengt. Eine erfindungsgemäße Schlichte umfasst im gebrauchsfertigen Zustand vorzugsweise einen Feststoffgehalt von 20-80 Gew.-%, vorzugsweise 30-70 Gew.%, bezogen auf alle Bestandteile der Schlichte. Es ist ferner auch möglich, eine erfindungsgemäße Schlichtezusammensetzung bereitzustellen, deren Lösungsmittelkomponente zunächst nur aus Wasser besteht. Durch Zugabe eines flüchtigen Alkohols oder Alkoholgemischs, vorzugsweise Ethanol, Propanol, Isopropanol und Gemische davon, in vorzugsweise Mengen von 40 bis 200 Gew.-%, bezogen auf die Wasserschlichte, kann aus dieser Wasserschlichte eine gebrauchsfertige Alkoholschlichte bereitgestellt werden. Der Feststoffgehalt einer erfindungsgemäße Alkoholschlichte beträgt dabei vorzugsweise 20-60 Gew.-%, stärker bevorzugt 30-40 Gew.-%.

Je nach gewünschter Verwendung der Schlichtezusammensetzung, z.B. als Grundbeschichtung oder als Deckbeschichtung, und gewünschter Schichtdicke der aufzutragenden Schlichtezusammensetzung können weitere charakteristische Parameter der Schlichtezusammensetzung eingestellt werden. So weisen erfindungsgemäße Schlichtezusammensetzungen, die zur Beschichtung von Formen und Kernen in der Gießereitechnik verwendet werden, in einer bevorzugten Ausführungsform eine Viskosität von 12-25 s, stärker bevorzugt 14-16 s auf (bestimmt nach DIN 53211; Auslaufbecher 4mm, Ford-Cup). Bevorzugte Dichten einer gebrauchsfertige Schlichtezusammensetzung liegen im Bereich von 20-50°Bé, stärker bevorzugt von 25-35°Bé (bestimmt nach der Baumé-Auftriebsmethode; DIN 12791).

Die erfindungsgemäßen Schlichtezusammensetzungen können zum Beschichten von Gießformen verwendet werden. Der hier verwendete Ausdruck "Gießform" umfasst alle Arten von Körpern, welche zur Herstellung eines Gussstücks notwendig sind, wie etwa Kerne, Formen und Kokillen. Die erfindungsgemäße Verwendung der Schlichtezusammensetzungen umfasst auch ein teilweises Beschichten von Gießformen. Vorzugsweise werden die Oberflächen einer Gießform beschichtet, die mit dem Gießmetall in Kontakt kommen. Die Schlichtezusammensetzungen eignen sich für alle denkbaren Anwendungen, bei denen eine Beschichtung von Gießformen mit Schlichten erwünscht ist. Als Beispiele für Gießformen, d.h. für Kerne und Formen im Gießereieinsatz, können Sandkerne genannt werden, die PUR Coldbox-, Wasserglas CO₂-, MF Resol-, Resol CO₂-, Furanharz-, Phenolharz- oder Wasserglas/Ester-gebunden sind. Andere Beispiele für bevorzugte Gießformen, die mit den erfindungsgemäßen Schlichtezusammensetzungen beschichtet werden können, sind z.B. in "Formstoffe und Formverfahren", Eckart Flemming und Werner Tilch, Wilexy VCH, 1993, ISBN 3-527-30920-9, beschrieben.

Ein Verfahren zum Beschichten einer Gießform mit einer erfindungsgemäßen Schlichtezusammensetzung umfasst die Schritte:
(a) Bereitstellen einer Grundform einer Gießform (unbeschichtete Gießgrundform);
(b) Bereitstellen einer erfindungsgemäßen Schlichtezusammensetzung;
(c) gegebenenfalls Aufbringen und Trocknen mindestens einer Schicht einer Grundbeschichtungszusammensetzung auf mindestens einen Teil der Oberfläche der Gießgrundform;
(d) Aufbringen mindestens einer Schicht einer erfindungsgemäßen Schlichtezusammensetzung auf mindestens einen Teil der Oberflächen der Gießgrundform oder der eine Grundbeschichtung enthaltenden Gießform;
(e) Trocknen der Schlichtezusammensetzung; und
(f) gegebenenfalls Härten der getrockneten Schlichte;
wobei eine Deckbeschichtung hergestellt wird.

Bei Gießformen für Schleudergießverfahren wird in der Regel die Schlichte in mehreren Gängen, d.h. Schichten, aufgebracht, wobei die aufgebrachte Schlichteschicht in der Regel vor dem Aufbringen der nächsten Schlichteschicht teilweise oder vollständig getrocknet wird. Es werden in der Regel 2-5 Schichten aufgebracht. Beim Großguss (schwerer Guss >10 Tonnen (t)) wird in der Regel die Schlichtezusammensetzung nur einmal aufgetragen, wobei an kritischen Stellen zuvor eine Grundierungsschicht aufgebracht werden kann. Beim leichten (Guss bis 2t) und mittelschweren Guss (bis 2-10t) wird in der Regel nicht grundiert.

Das Aufbringen einer Grundbeschichtung, falls gewünscht, auf die Gießgrundform kann mittels aller in der Technik konventionellen Aufbringungsverfahren erfolgen. Die Grundbeschichtungen können als Grundstoffe z.B. Tone, Talkum, Quarz, Glimmer, Zirkonsilikat, Magnesit, Aluminiumsilikat, und Schamotte enthalten. Diese Grundstoffe sind der zweckbestimmende Anteil der Grundbeschichtung. Sie überdecken die Gießformoberfläche, schließen die Sandporen gegen das Eindringen des Gießmetalls ab und dienen u.a. auch als thermische Isolierung gegenüber der Gießform. Üblicherweise verwendete Aufbringungsmethoden sind Tauchen, Fluten, Sprühen und Streichen. In einer bevorzugten Ausführungsform kann als Grundbeschichtung auch eine Schlichtezusammensetzung der vorliegenden Erfindung verwendet werden. Die Grundbeschichtung weist eine Trockenschichtstärke von mindestens 0,1 mm, vorzugsweise mindestens 0,2 mm, stärker bevorzugt mindestens 0,45 mm und am meisten bevorzugt im Bereich von 0,3 mm bis 1,5 mm auf. Als Grundbeschichtung können sowohl Wasserschlichten als auch Alkoholschlichten verwendet werden.

Das Aufbringen einer erfindungsgemäße Schlichtezusammensetzung zur Herstellung einer Deckbeschichtung kann mittels aller in der Technik konventionellen Aufbringungsverfahren erfolgen. Beispiele für bevorzugte Aufbringungsverfahren sind Tauchen, Fluten, Sprühen und Streichen. Konventionelle Aufbringungsverfahren sind z.B. in "Formstoffe und Formverfahren", Eckart Flemming und Werner Tilch, Wiley VCH, 1993, ISBN 3-527-30920-9, beschrieben.

Beim Tauchen als Aufbringungsverfahren wird die gegebenenfalls eine Grundbeschichtung enthaltende Gießform in ein Behältnis mit einer gebrauchsfertigen, erfindungsgemäßen Schlichtezusammensetzung für etwa 2 Sekunden bis 2 Minuten eingetaucht. Die Zeit, die das Ablaufen der überschüssigen Schlichtezusammensetzung nach dem Tauchen in Anspruch nimmt, richtet sich nach dem Ablaufverhalten der verwendeten Schlichtezusammensetzung. Nach einer ausreichenden Ablaufzeit wird die beschichtete Gießform einer Trocknung unterzogen.

Beim Sprühen als Aufbringungsverfahren werden handelsübliche Druckkesselsprühgeräte verwendet. Hierbei wird die Schlichte im verdünnten Zustand in einen Druckkessel gefüllt. Über den einzustellenden Überdruck kann die Schlichte ein eine Sprühpistole gedrückt werden, wo sie mit Hilfe von separat regulierbarer Zerstäuberluft versprüht wird. Beim Sprühen ist vorzugsweise darauf zu achten, dass die Pistole so eingestellt ist, dass der Druck für die Schlichtezusammensetzung und die Zerstäuberluft so eingestellt ist, dass die versprühte Schlichte noch nass auf der Form oder dem Kern auftrifft, aber einen gleichmäßigen Auftrag ergibt. Das Aufbringen der erfindungsgemäßen Schlichtezusammensetzung kann in einer oder mehreren Schichten erfolgen. Beim Aufbringen mehrerer Schichten kann jede einzelne Schicht nach dem Aufbringen vollständig oder teilweise getrocknet werden.

Als Trocknungsverfahren können alle in der Technik konventionellen Trocknungsverfahren, wie beispielsweise Trocknenlassen an der Luft, Trocknung mit entfeuchteter Luft, Trocknen mit Mikrowellen- oder Infrarotstrahlung, Trocknen im Konvektionsofen, und dergleichen angewendet werden. In einer bevorzugten Ausführungsform der Erfindung wird die beschichtete Gießform bei 100-250°C, stärker bevorzugt bei 120-180°C, in einem Konvektionsofen getrocknet. Bei der Verwendung von Alkoholschlichten wird die erfindungsgemäße Schlichtezusammensetzung bevorzugt durch Abbrennen des Alkohols oder Alkoholgemischs getrocknet. Hierbei wird die beschichtete Gießform durch die Verbrennungswärme zusätzlich erwärmt. In einer weiteren bevorzugten Ausführungsform wird die beschichtete Gießform ohne weitere Behandlung an der Luft getrocknet.

Nach dem Trocknen kann die getrocknete Schlichte gegebenenfalls weiter gehärtet werden. Es können alle bekannten Härtungsverfahren verwendet werden. Zugegebene Härter können mittels Wärme oder elektromagnetischer Strahlung aktiviert werden. Wasser- oder Alkoholschlichten kann man z.B. bei Temperaturen unterhalb 100°C trocknen. Zur Härtung bestimmter Bindemittel, z.B. von Phenolharzen, werden Temperaturen von ca. 140-160°C benötigt. In Abhängigkeit von der verwendeten Temperatur können Trocknen und Härten der Schlichte in einem Schritt oder in getrennten Schritten durchgeführt werden. Denkbar wären auch radikalische und ionische Härtungsverfahren.

Die Trockenschichtstärke der Deckbeschichtung, welche aus der erfindungsgemäßen Schlichtezusammensetzung erhalten wurde, beträgt mindestens 0,1 mm, vorzugsweise mindestens 0,2 mm, stärker bevorzugt mindestens 0,3 mm, noch stärker bevorzugt mindestens 0,45 mm, besonders bevorzugt mindestens 0,55 mm und liegt am meisten bevorzugt in einem Bereich von 0,3 mm bis 1,5 mm. Die Trockenschichtstärke ist hierbei die Schichtstärke der getrockneten Schlichte, welche durch Trocknen der Schlichtezusammensetzung durch im Wesentlichen vollständiges Entfernen der Lösungsmittelkomponente und gegebenenfalls anschließendem Härten erhalten wurde. Die Trockenschichtstärke der Grundbeschichtung und der Deckbeschichtung werden vorzugsweise durch Messung mit dem Nassschichtdickenkamm ermittelt. Man kann beispielsweise mit dem Kamm die Schichtdicke so bestimmen, indem man die Schlichte an den Endmarken des Kamms solange wegkratzt, bis der Untergrund zum Vorschein kommt. An den Markierungen der Zähne kann man dann die Schichtdicke ablesen. Man kann stattdessen auch die Naßschichtdicke im abgematteten Zustand messen, wobei dann die Trockenschichtdicke 70-80% der Dicke der abgematteten Schicht beträgt. (Eine "abgemattete" Schicht ist eine nicht mehr fließfähige Schicht, in der der Lösungsmittelanteil so stark reduziert ist, so dass die Oberfläche keinen Glanz mehr aufweist.)

Gießformen mit einer getrockneten, erfindungsgemäßen Schlichte, im folgenden auch Deckbeschichtung genannt, werden vorzugsweise in Schleudergießverfahren und Großgussverfahren verwendet. Die Grundprinzipien dieser Gießverfahren sind beispielsweise in Stefan Hasse, "Gießereilexikon", Schiele & Schön, Berlin, 1997 beschrieben. Beim Großguss wird eine ruhende Dauerform, z.B. aus Sand, Stahl oder Gusseisen, im allgemeinen unter dem Eindruck der Schwerkraft, mit dem flüssigen Gießmetall gefüllt. Die Gussstückgestalt ist durch die Form vollständig vorgegeben. Beim Schleudergießverfahren wird das Gießmetall in eine um ihre Achse rotierende, rohr- oder ringförmige Kokille gefüllt, in der es unter Einwirkung der Zentrifugalkraft zu Büchsen, Ringen und Rohren (z.B. Druckrohren aus Gusseisen, Rohren aus Kupfer und Kupferlegierungen, Kolbenringen, Zylinderlaufbüchsen, Rippenzylindern) geformt wird. Der rotationssymmetrische Hohlraum entsteht durch die Fliehkraft, die bis zur Erstarrung des Gussstücks aufrechterhalten bleibt. Die Wanddicke ergibt sich durch die Menge des zugeführten Metalls. Die erfindungsgemäße Schlichtezusammensetzung wird beim Großgussverfahren vorzugsweise durch Tauchen oder Fluten der Gießgrundform in einem Tauch- oder Flutbecken aufgebracht. Vorzugsweise werden beim Großgussverfahren aus der erfindungsgemäßen Schlichtezusammensetzung Deckbeschichtungen mit einer Trockenschichtdicke von 0,3-1,5 mm hergestellt. Vorzugsweise wird beim Schleudergießverfahren aus der erfindungsgemäßen Schlichtezusammensetzung eine Deckbeschichtung mit einer Trockenschichtdicke im Bereich von 0,3-1,2 mm hergestellt.

Gießformen, welche eine Deckbeschichtung umfassen, welche aus den erfindungsgemäßen Schlichtezusammensetzungen hergestellt wurden, werden unter anderem zur Herstellung von Rohren, Zylinderlaufbuchsen, Motoren- und Motorkomponenten, Maschinenbetten, Turbinen, und allgemeine Maschinenkomponenten verwendet.

Die Erfindung wird durch die folgenden Beispiele weiter erläutert.

### Beispiele

### Schleudergussschlichte

Die in den nachfolgenden Beispielen verwendete Schleudergussschlichte enthielt folgende Bestandteile (Gew.-%):

| | |
|---|---|
| Satintone Plus | 25,00 |
| Pyrax RG 140 | 25,00 |
| Bentonit | 00,60 |
| Hectorit | 00,20 |
| Biozid | 00,20 |
| Wasser | 49,00 |

| | |
|---|---|
| Satintone Plus: | Metakaolinit, Teilchengröße2,0 µm; hergestellt von Engelhard Cooperation, Iseli, USA |
| Pyrax RG 140: | Pyropyllit mit einer Teilchengröße von ca. 80 µm; hergestellt von R.T.Vanderbilt Company Inc., Norwalk, USA |
| Bentonit: | Greenbond; hergestellt von Südchemie AG, 80333 München, Deutschland |
| Hectorit: | Bentone EW; hergestellt von Elementis Specialities Inc., NJ 08520 Hightstown, USA |
| Biozid: | Acticide MBS (BIT, MIT) von Thor Ltd, Margate Kent CT9 4JY, UK |

Die Schleudergussschlichte wurde wie folgt hergestellt: Die gesamte Menge Wasser wird vorgelegt und hierin wird der Bentonit und Hectorit durch Verwendung eines hochscherenden Rührers Ekato (1000 UPM, Zahnscheibe mit d/D=0,5) mindestens 15 Minuten aufgeschlossen. Anschließend werden die Feuerfestkomponenten Metakaolinit und Pyrophyllit zugegeben und mindestens 15 Minuten eingerührt, bis eine homogene Mischung entsteht. Zum Schluss wurde das Biozid eingerührt. Die Viskosität betrug 9,6 Sekunden mit DIN 6 Becher bzw. 33 Sekunden mit DIN 4 Becher.

### Wasserverdünnbare Formgussschlichte

Die in den nachstehenden Beispielen verwendete wasserverdünnbare Formgussschlichte enthielt folgende Bestandteile (Gew.-%):

| | |
|---|---|
| Satintone W | 25,00 |
| Pyrax RG 140 | 25,00 |
| Bentonit | 02,00 |
| Netzmittel | 00,05 |
| Entschäumer | 00,20 |
| Bindemittellösung | 02,00 |
| Biozid | 00,20 |
| Wasser | 45,55 |

| | |
|---|---|
| Satintone W: | Metakaolinit, Schüttgewicht (loose) ca. 300 g/l, Teilchengröße ca. 1,5 µm; hergestellt von Engelhard Cooperation, Iseli, USA |
| Pyrax RG 140: | Pyropyllit mit einer Teilchengröße von ca. 80 µm; hergestellt von R.T.Vanderbilt Company Inc., Norwalk, USA |
| Bentonit: | Greenbond; hergestellt von Südchemie AG, 80333 München, Deutschland |
| Netzmittel: | übliches Netzmittel der Fa. Henkel AG, 40589 Düsseldorf, Deutschland |
| Entschäumer: | üblicher Entschäumer der Fa. Henkel AG, 40589 Düsseldorf, Deutschland Bindemittellösung: Polyviol, Wacker-Chemie GmbH, 81737.München, Deutschland |
| Biozid: | Acticide MBS (BIT, MIT) von Thor Ltd, Margate Kent CT9 4JY, UK |

Die Formgussschlichte wurde nach dem oben für die Schleudergussschlichte beschriebenen Verfahren hergestellt. Die Dichte der hergestellten Schlichte betrug 1,3-1,4 g/cm³ und die Viskosität nach Brookfield 2-5 Pa·s.

### Alkoholverdünnbare Formgussschlichte

Die in den nachstehenden Beispielen verwendete alkoholverdünnbare Formgussschlichte enthielt folgende Bestandteile (Gew.-%):

| | |
|---|---|
| Satintone W | 25,80 |
| Pyrax RG 140 | 25,80 |
| Bentonit | 02,06 |
| Grafit | 05,16 |
| Eisenoxid | 03,10 |
| Netzmittel | 00,05 |
| Entschäumer | 00,20 |
| Bindemittellösung | 01,91 |
| Biozid | 00,05 |
| Wasser | 36,12 |

| | |
|---|---|
| Satintone W: | Metakaolinit; hergestellt von Engelhard Cooperation, Iseli, mit einem Schüttgewicht (loose) von ca. 300 g/l und einer Teilchengröße von ca. 1,5 µm |
| Pyrax RG 140: | Pyropyllit mit einer Teilchengröße von ca. 80 µm; hergestellt von R.T.Vanderbilt Company Inc., Norwalk, USA |
| Bentonit: | Greenbond; hergestellt von Südchemie AG, 80333 München, Deutschland |
| Netzmittel: | übliches Netzmittel der Fa. Henkel AG, 40589 Düsseldorf, Deutschland |
| Grafit: | Fa. Georg H. Luh GmbH, 65396 Walluf, Deutschland |
| Eisenoxid: | Eisenoxid Gelb, BayerAG, 51368 Leverkusen, Deutschland |
| Bindemittellösung: | Necowel, ASK GmbH, 40721 Hilden, Deutschland |
| Biozid: | Acticide MBS (BIT, MIT) von Thor Ltd, Margate |

Die Formgussschlichte wurde nach dem oben für die Schleudergussschlichte beschriebenen Verfahren hergestellt. Die fertige Schlichte wies eine Spindeldichte von 80°Bé auf.

### Beispiel 1

### (Schleudergießverfahren unter Verwendung der vorstehenden Schleudergussschlichte)

Obengenannte Schleudergussschlichte wies folgende Schlichtedaten auf:

| | |
|---|---|
| Dichte: | 50°Bé |
| Viskosität: | 9,6 Sekunden mit DIN 6 Becher; 33 Sekunden mit DIN 4 Becher |

Für die Verarbeitungskonsistenz werden 15 1 (20 kg) Schlichte mit 5 1 Wasser weiter verdünnt auf eine Dichte von 37°Bé und eine Viskosität von 13,2 s (DIN 4 Becher).

Im Schleudergießverfahren wird ein Rohr hergestellt. Die auf ca. 200°C vorgeheizte verwendete Kokille (Innendurchmesser ca. 90 mm) wurde beschichtet, in dem die erfindungsgemäße Schlichtezusammensetzung mit einem Schlichtedruck von 0,9 bar mit einer Düker-Zerstäuber-Lanze mit 500 mm/s Vorschub aufgebracht wurde. Die Trockenschichtdicke betrug 0,65 mm. Die Schlichte trocknete durch die Eigenwärme der Kokille während des Sprühvorgangs. Es wurde eine Deckbeschichtung mit einer brauchbaren Oberfläche erhalten. Beim Schleudergießen zeigte sich ein gutes Ziehverhalten des Rohres. Die metallurgischen Untersuchungen zeigten die gewünschte Granfitausbildung im Grauguss (Fe,C, Si) und den richtigen Härtebereich des Graugusses, was auf eine ausreichende Isolierwirkung der Schlichte hinweist.

### Beispiel 2

### (Schleudergießverfahren unter Verwendung der vorstehenden Schleudergussschlichte)

Wie in Beispiel 1, wurde mit Hilfe eines Schleudergießverfahrens ein Rohr hergestellt. Im Unterschied zu Beispiel 1 betrug jedoch die Trockenschichtdicke der Deckbeschichtung 0,85 mm. Die erhaltene Deckbeschichtung zeigte eine brauchbare Oberfläche. Das Ziehverhalten des Rohres war gut. Die metallurgischen Untersuchungen zeigten die gewünschte Grafitausbildung und richtigen Härtebereich des Graugusses, was auf eine ausreichende Isolierwirkung der Schlichte hinweist.

### Beispiel 3:

### PUCB-Kern für V-Motor

Es wurde ein PUCB(Polyurethan Cold-Box)-Kern für einen V-Motor mit obengenannter wasserverdünnbarer Formgussschlichte behandelt. Für den Kern wurde ein 100% No-Bake Altsandregenerat (No-Bake bedeutet ein selbsthärtendes Verfahren, wobei z.B. Furanharz mit Paratoluolsulfonsäure ausgehärtet wird. Der Sand dieser Kerne oder Formen wird regeneriert, d.h. durch ein Reibverfahren wieder verwendbar gemacht. In diesem Beispiel wurde der Sand für das gashärtende (Amin) PUCB Verfahren verwendet). Für die Verarbeitungskonsistenz wurden 100 Gew.-Teile der Formgussschlichte mit 5 Gew.-Teilen Wasser verdünnt.
Einstellung der Schlichte: Dichte: 44°Bé
Viskosität: > 25 s (DIN 4 Becher)

Die Schlichte wurde mittels Fluten auf den Kern aufgebracht. Das Fließverhalten der Schlichte war gut und die Nassschichtdicke betrug 250 µm. Der Kern wurde im Kammerofen mit Umluft bei 160-180°C getrocknet. Die Deckung der getrockneten Schlichte für diesen Kern war an der unteren Grenze. Das Gussergebnis war fehlerfrei.

### Beispiel 4:

### Kurbelraumkern, Furanharz

Ähnlich wie in Beispiel 3 wurde oben genannte wasserverdünnbare Formgussschlichte auf einen unbehandelten Kurbelraumkern aus Furanharz aufgetragen. Für die Verarbeitungskonsistenz wurden 100 Gew.-Teile der Schlichte mit 20 Gew.-Teilen Wasser verdünnt.
Einstellung der Schlichte: Dichte: 40°Bé
Viskosität: 18,4 s (DIN 4 Becher),

Das Fließverhalten der Schlichte war gut und die Nassschichtdicke betrug 300 µm. Die Deckung der getrockneten Schlichte war gut. Das Gussergebnis war fehlerfrei.

### Beispiele 5

Es wurden No-Bakeformen mit oben angeführter, alkoholverdünnbaren Formgussschlichte behandelt. Die Formgussschlichte, wie oben beschrieben, zeigte im Auslieferungszustand eine Spindeldichte von 80°Bé und wurde, bezogen auf das Gesamtgewicht der Schlichte, mit etwa 80% Verdünnung (60% Isopropanol, 40% Ethanol) verdünnt auf eine Spindeldichte von 9°Bé, eine Viskosität von 13,0 s und ein Litergewicht von 1000 g/l. Mit dieser Einstellung wurden No-Bakeformen geflutet. Die Geruchsbelastung an der Flutanlage war im Vergleich zu herkömmlichen Pyrophyllit/Isopropanol-Schlichten deutlich geringer. Die Nassschichtdicke betrug 250-300 µm. Die Formen ließen sich durch Abbrennen des Alkohols auch in ca. 30 cm tiefen Taschen vollständig trocknen und zeigten eine gute Abriebfestigkeit. Trockenrisse oder Blasen waren nicht zu beobachten. Die Gussergebnisse zeigten keine Auffälligkeiten im Vergleich zu Pyrophyllit/Isopropanol-Schlichten.

## Patentansprüche

1. Schlichtezusammensetzung für Gießformen, umfassend eine Lösungsmittelkomponente und eine Feststoffkomponente, **dadurch gekennzeichnet, dass** die Feststoffkomponente als Hauptbestandteil ein Gemisch aus Metakaolinit und Pyrophyllit umfasst.

2. Schlichtezusammensetzung nach Anspruch 1, wobei die Schlichtezusammensetzung weniger als 5 Gew.%, vorzugsweise weniger als 3 Gew.%, besonders bevorzugt weniger als 1 Gew.% Kieselgur, bezogen auf alle Bestandteile der Schlichtezusammensetzung, aufweist.

3. Schlichtezusammensetzung nach Anspruch 1, wobei die Feststoffkomponente ein Gemisch aus Metakaolinit und Pyrophyllit im Verhältnis von 1:3 bis 20:1 umfasst.

4. Schlichtezusammensetzung nach Anspruch 1, wobei die Feststoffkomponente ein Gemisch aus Metakaolinit und Pyrophyllit im Verhältnis von 1:1 bis 14:1, vorzugsweise 1:1 bis 10:1, stärker bevorzugt 2:1 bis 6:1, und am meisten bevorzugt im Verhältnis von 2:1 bis 5:1 umfasst.

5. Schlichtezusammensetzung nach einem der Ansprüche 1 bis 4, wobei der Metakaolinit eine spezifische Oberfläche nach BET von mindestens 10 m²/g, vorzugsweise mindestens 25 m²/g aufweist, gemessen gemäß DIN 66 131.

6. Schlichtezusammensetzung nach einem der Ansprüche 1 bis 5, wobei der Metakaolinit einen Glühverlust von weniger als 3 Gew.%, vorzugsweise weniger als 1 Gew.% aufweist, gemessen gemäß DIN 38 414.

7. Schlichtezusammensetzung nach einem der Ansprüche 1 bis 6, wobei der Metakaolinit ein unverdichtetes Schüttgewicht von 100-300 g/l, vorzugsweise 150-200 g/l aufweist, gemessen gemäß DIN 53 194.

8. Schlichtezusammensetzung nach einem der Ansprüche 1 bis 7, wobei der Metakaolinit eine hohe spezifische Oberfläche, ausgedrückt in Ölabsorption, zwischen 50 und 120 %, vorzugsweise zwischen 85 und 120 % aufweist, gemessen gemäß DIN 53 109.

9. Schlichtezusammensetzung gemäß einem der Ansprüche 1 bis 8, wobei der Pyrophyllit einen Aspekt (Längen zu Dickeverhältnis) von mindestens 5, vozugsweise 10-30, aufweist.

10. Schlichtezusammensetzung gemäß einem der Ansprüche 1 bis 9, wobei der Pyrophyllit ein unverdichtetes Schüttgewicht von 300-600 g/l, vorzugsweise 300-400 g/l aufweist, gemessen gemäß DIN 53 194.

11. Schlichtezusammensetzung nach einem der Ansprüche 1 bis 10, wobei der Metakaolinit eine Korngröße von 0,1 µm bis 10 µm aufweist.

12. Schlichtezusammensetzung nach einem der Ansprüche 1 bis 11, wobei der Pyrophyllit eine Korngröße von 20 µm bis 200 µm aufweist.

13. Schlichtezusammensetzung nach einem der Ansprüche 1 bis 12, ferner umfassend 0,1 bis 10 Gew.%, vorzugsweise 0,1 bis 5 Gew.%, stärker bevorzugt 0,5 bis 3 Gew.%, bezogen auf alle Bestandteile der Zusammensetzung, Bentonit und/oder Hectorit.

14. Schlichtezusammensetzung gemäß einem der Ansprüche 1 bis 13, umfassend mindestens eine weitere Komponente, ausgewählt aus Bindemitteln, Netzmitteln, Netzer/Entschäumer, Pigmenten, Farbstoffen und Bioziden.

15. Schlichtezusammensetzung gemäß Anspruch 14, wobei das Bindemittel aus einer Dispersion eines Alkydharzes besteht, das sowohl in Wasser als auch in Ethanol oder Isopropanol löslich ist.

16. Schlichtezusammensetzung nach einem der Ansprüche 1 bis 15, wobei die Lösungsmittelkomponente 20-80 Gew.-% Wasser und gegebenenfalls als weitere Komponente 0-60 Gew.% eines oder mehrerer organischen, flüchtigen Lösungsmittel umfasst, bezogen auf alle Bestandteile der Zusammensetzung.

17. Schlichtezusammensetzung nach einem der Ansprüche 1 bis 15, wobei die Lösungsmittelkomponente nur aus Wasser besteht.

18. Schlichtezusammensetzung nach Anspruch 16, wobei das organische, flüchtige Lösungsmittel ein Alkohol oder Alkoholgemisch ist, vorzugsweise ausgewählt aus Ethanol, Propanol, Isopropanol und Gemischen davon.

19. Schlichtezusammensetzung nach einem der Ansprüche 1 bis 18, wobei die Schlichtezusammensetzung
10-40 Gew.% Metakaolinit,
5-20 Gew.% Pyrophyllit, und
10-85 Gew.% Wasser
umfasst, bezogen auf alle Bestandteile der Zusammensetzung.

20. Schlichtezusammensetzung nach einem der Ansprüche 1 bis 18, wobei, die Schlichtezusammensetzung folgende Bestandteile umfasst:
15-40 Gew.% Metakaolinit,
7-20 Gew.% Pyrophyllit,
0,1-5 Gew.% Bentonit und/oder Hectorit,
0,0-2 Gew. % Bindemittel,
0,01-0,5 Gew.% Biozid, und
10-78 Gew.% Wasser.

21. Grießform, umfassend eine Deckbeschichtung auf der Gießseite der Gießform, welche durch Auftragen und Trocknen einer Schlichtezusammensetzung gemäß einem der Ansprüche 1 bis 20 hergestellt wurde.

22. Gießform nach Anspruch 21, wobei die Deckbeschichtung eine Trockenschichtstärke von mindestens 0,1 mm, vorzugsweise mindestens 0,2 mm, und stärker bevorzugt 0,3 mm bis 1,5 mm aufweist.

23. Gießform nach Anspruch 21 oder 22, wobei mindestens ein Teil der Deckbeschichtung auf eine Grundbeschichtung aufgebracht ist.

24. Schleudergießverfahren, umfassend die Verwendung einer Gießform nach einem der Ansprüche 21 bis 23.

25. Großgussverfahren, umfassend die Verwendung einer Gießform nach einem der Ansprüche 21 bis 23.

26. Verfahren zur Herstellung einer Gießform, umfassend zur Herstellung einer Deckbeschichtung das Aufbringen und Trocknen mindestens einer Schicht einer Schlichtezusammensetzung auf mindestens einen Teil der Oberfläche der Gießform, wobei eine Schichtezusammensetzung gemäß einem der Ansprüche 1 bis 20 verwendet wird.

27. Verfahren nach Anspruch 26, wobei auf mindestens einen Teil der Oberfläche der Gießform zuerst mindestens eine Schicht einer Grundbeschichtung aufgetragen wird und wobei die Schlichtezusammensetzung auf die Grundbeschichtung und gegebenenfalls auf weitere Teile der Oberfläche der Gießform aufgebracht wird.

28. Verfahren nach Anspruch 27, wobei zur Herstellung der Grundbeschichtung ebenfalls eine Schlichtezusammensetzung nach einem der Ansprüche 1 bis 20 verwendet wird.

29. Verfahren nach einem der Ansprüche 26 bis 28, wobei die Deckbeschichtung eine Trockenschichtstärke von mindestens 0,1 mm, vorzugsweise mindestens 0,2 mm, und stärker bevorzugt 0,3 mm bis 1,5 mm aufweist.

30. Verfahren nach einem der Ansprüche 26 bis 29, wobei die Grundbeschichtung eine Trockenschichtstärke von mindestens 0,1 mm, vorzugsweise mindestens 0,2 mm, und stärker bevorzugt 0,3 mm bis 1,5 mm aufweist.

31. Verwendung einer Gießform gemäß einem der Ansprüche 21 bis 23 zur Herstellung von Rohren, Zylinderlaufbuchsen, Motoren- und Motorkomponenten, Maschinenbetten und Turbinen.

## Claims

1. A wash composition for casting moulds comprising a solvent component and a solids component, **characterized in that** the solids component comprises as main component a mixture of metakaolinite and pyrophyllite.

2. A wash composition according to claim 1, wherein the wash composition has less than 5 wt.-%, preferably less than 3 wt.-%, most preferably less than 1 wt.-% of diatomite, based on all components of the wash composition.

3. A wash composition according to claim 1, wherein the solids component comprises a mixture of metakaolinite and pyrophyllite in a ratio of 1:3 to 20:1.

4. A wash composition according to claim 1, wherein the solids component comprises a mixture of metakaolinite and pyrophyllite in a ratio of 1:1 to 14:1, preferably 1:1 to 10:1, more preferably 2:1 1 to 6:1, and most preferably in a ratio of 2:1 1 to 5:1.

5. A wash composition according to any one of claims 1 to 4, wherein the metakaolinite has a specific surface according to BET of at least 10 m²/g, preferably at least 25 m²/g, measured according to DIN 66 131.

6. A wash composition according to any one of claims 1 to 5, wherein the metakaolinite has a loss on ignition of less than 3 wt.-%, preferably less than 1 wt.-%, measured according to DIN 38 414.

7. A wash composition according to any one of claims 1 to 6, wherein the metakaolinite has an uncompressed bulk density of 100 to 300 g/l, preferably 150 to 200 g/l, measured according to DIN 53 194.

8. A wash composition according to any one of claims 1 to 7, wherein the metakaolinite has a high specific surface, expressed in oil absorption, between 50 and 120 %, preferably between 85 and 120 %, measured according to DIN 53 109.

9. A wash composition according to any one of claims 1 to 8, wherein the pyrophyllite has an aspect (length to thickness ratio) of at least 5, preferably 10 to 30.

10. A wash composition according to any one of claims 1 to 9, wherein the pyrophyllite has an uncompressed bulk density of 300 to 600 g/l, preferably 300 to 400 g/l, measured according to DIN 53 194.

11. A wash composition according to any one of claims 1 to 10, wherein the metakaolinite has a grain size of 0.1 µm to 10 µm.

12. A wash composition according to any one of claims 1 to 11, wherein the pyrophyllite has a grain size of 20 µm to 200 µm.

13. A wash composition according to any one of claims 1 to 12, further comprising 0.1 to 10 wt.-%, preferably 0.1 to 5 wt.-%, more preferably 0.5 to 3 wt.-% of bentonite and/or hectorite, based on all components of the composition.

14. A wash composition according to any one of claims 1 to 13, comprising at least one further component selected from the group consisting of binders, wetting agents, wetters/defoamers, pigments, dyes and biocides.

15. A wash composition according to claim 14, wherein the binder consists of a dispersion of an alkyd resin which is soluble in water as well as in ethanol or isopropanol.

16. A wash composition according to any one of claims 1 to 15, wherein the solvent component comprises 20 to 80 wt.-% of water and optionally as further component 0 to 60 wt.-% of one or more organic volatile solvents, based on all components of the composition.

17. A wash composition according to any one of claims 1 to 15, wherein the solvent component is only water.

18. A wash composition according to claim 16, wherein the organic volatile solvent is an alcohol or an alcohol mixture, preferably selected from the group consisting of ethanol, propanol, isopropanol and mixtures thereof.

19. A wash composition according to any one of claims 1 to 18, wherein the wash composition comprises
10 to 40 wt.-% metakaolinite,
5 to 20 wt.-% pyrophyllite, and
10 to 85 wt.-% water,
based on all components of the composition.

20. A wash composition according to any one of claims 1 to 18, wherein the wash composition comprises the following components:
15 to 40 wt.-% metakaolinite,
7 to 20 wt.-% pyrophyllite,
0.1 to 5 wt.-% bentonite and/or hectorite,
0.0 to 2 wt.-% binder,
0.01 to 0.5 wt.-% biocide, and
10 to 78 wt.-% water.

21. A casting mould comprising a top coating on the casting side of the casting mould, which has been produced by applying and drying a wash composition according to any one of claims 1 to 20.

22. A casting mould according to claim 21, wherein the top coating has a dry layer thickness of at least 0.1 mm, preferably at least 0.2 mm, and more preferably 0.3 mm to 1.5 mm.

23. A casting mould according to claim 21 or 22, wherein at least one part of the top coating is applied onto an undercoating.

24. A centrifugal casting process comprising the use of a casting mould according to any one of claims 21 to 23.

25. A large-scale casting process comprising the use of a casting mould according to any one of claims 21 to 23.

26. A method for producing a casting mould, comprising for the production of a top coating, applying and drying of at least one layer of a wash composition on at least one part of the surface of the casting mould, wherein a wash composition according to any one of claims 1 to 20 is used.

27. A method according to claim 26, wherein first at least one layer of an undercoating is applied to at least one part of the surface of the casting mould, and wherein the wash composition is applied to the undercoating and optionally to further parts of the surface of the casting mould.

28. A method according to claim 27, wherein also a wash composition according to any one of claims 1 to 20 is used for the production of the undercoating.

29. A method according to any one of claims 26 to 28, wherein the top coating has a dry layer thickness of at least 0.1 mm, preferably at least 0.2 mm, and more preferably 0.3 mm to 1.5 mm.

30. A method according to any one of claims 26 to 29, wherein the undercoating has a dry layer thickness of at least 0.1 mm, preferably at least 0.2 mm, and more preferably 0.3 mm to 1.5 mm.

31. Use of a casting mould according to any one of claims 21 to 23 for the production of tubes, cylinder liners, engines and engine components, machine beds and turbines.

## Revendications

1. Composition d'enduit pour moules de coulée comprenant un composant solvant et un composant solide, **caractérisée en ce que** le composant solide comprend comme constituant principal un mélange de métakaolinite et de pyrophyllite.

2. Composition d'enduit selon la revendication 1 où la composition d'enduit comporte moins de 5 % en masse, de préférence moins de 3 % en masse, de manière particulièrement préférée moins de 1 % en masse de kieselguhr, par rapport à tous les constituants de la composition d'enduit.

3. Composition d'enduit selon la revendication 1 où le composant solide comprend un mélange de métakaolinite et de pyrophyllite dans le rapport de 1:3 à 20:1.

4. Composition d'enduit selon la revendication 1 où le composant solide comprend un mélange de métakaolinite et de pyrophyllite dans le rapport de 1:1 à 14:1, de préférence de 1:1 à 10:1, de préférence encore de 2:1 à 6:1 et de manière particulièrement préférée dans le rapport de 2:1 à 5: 1.

5. Composition d'enduit selon l'une des revendications 1 à 4 où la métakaolinite présente une surface spécifique selon BET d'au moins 10 m²/g, de préférence d'au moins 25 m²/g, mesurée selon DIN 66 131.

6. Composition d'enduit selon l'une des revendications 1 à 5 où la métakaolinite présente une perte au feu inférieure à 3 % en masse, de préférence inférieure à 1 % en masse, mesurée selon DIN 38 414.

7. Composition d'enduit selon l'une des revendications 1 à 6 où la métakaolinite présente une masse volumique apparente non tassée de 100-300 g/l, de préférence de 150-200 g/l, mesurée selon DIN 53 194.

8. Composition d'enduit selon l'une des revendications 1 à 7 où la métakaolinite présente une surface spécifique élevée, exprimée en absorption d'huile, entre 50 et 120 %, de préférence entre 85 et 120 %, mesurée selon DIN 53 109.

9. Composition d'enduit selon l'une des revendications 1 à 8 où la pyrophyllite présente un aspect (rapport de la longueur à l'épaisseur) d'au moins 5, de préférence de 10-30.

10. Composition d'enduit selon l'une des revendications 1 à 9 où la pyrophyllite présente une masse volumique apparente non tassée de 300-600 g/l, de préférence de 300-400 g/l, mesurée selon DIN 53 194.

11. Composition d'enduit selon l'une des revendications 1 à 10 où la métakaolinite présente une taille de grain de 0,1 µm à 10 µm.

12. Composition d'enduit selon l'une des revendications 1 à 11 où la pyrophyllite présente une taille de grain de 20 µm à 200 µm.

13. Composition d'enduit selon l'une des revendications 1 à 12 comprenant en outre 0,1 à 10 % en masse, de préférence 0,1 à 5 % en masse, de préférence encore 0,5 à 3 % en masse, par rapport à tous les constituants de la composition, de bentonite et/ou d'hectorite.

14. Composition d'enduit selon l'une des revendications 1 à 13 comprenant au moins un autre composant, choisi parmi les liants, les dispersants, les agents mouillants/antimousse, les pigments, les colorants et les biocides.

15. Composition d'enduit selon la revendication 14 où le liant consiste en une dispersion d'une résine alkyde qui est soluble aussi bien dans l'eau que dans l'éthanol ou l'isopropanol.

16. Composition d'enduit selon l'une des revendications 1 à 15 où le composant solvant comprend 20-80 % en masse d'eau et éventuellement comme autre composant 0-60 % en masse d'un ou plusieurs solvants volatils organiques, par rapport à tous les constituants de la composition.

17. Composition d'enduit selon l'une des revendications 1 à 15 où le composant solvant ne consiste qu'en eau.

18. Composition d'enduit selon la revendication 16 où le solvant volatil organique est un alcool ou un mélange d'alcools, de préférence choisi parmi l'éthanol, le propanol, l'isopropanol et leurs mélanges.

19. Composition d'enduit selon l'une des revendications 1 à 18 où la composition d'enduit comprend
10-40 % en masse de métakaolinite,
5-20 % en masse de pyrophyllite et
10-85 % en masse d'eau
par rapport à tous les constituants de la composition.

20. Composition d'enduit selon l'une des revendications 1 à 18 où la composition d'enduit comprend les constituants suivants :
15-40 % en masse de métakaolinite,
7-20 % en masse de pyrophyllite,
0,1-5 % en masse de bentonite et/ou d'hectorite,
0,0-2 % en masse de liant,
0,01-0,5 % en masse de biocide et
10-78 % en masse d'eau.

21. Moule de coulée comprenant un revêtement de couverture sur le côté coulée du moule de coulée qui a été produit par application et séchage d'une composition d'enduit selon l'une des revendications 1 à 20.

22. Moule de coulée selon la revendication 21 où le revêtement de couverture présente une épaisseur de couche sèche d'au moins 0,1 mm, de préférence d'au moins 0,2 mm, et de préférence encore de 0,3 mm à 1,5 mm.

23. Moule de coulée selon la revendication 21 ou 22 où au moins une partie du revêtement de couverture est appliquée sur un revêtement de base.

24. Procédé de coulée centrifuge comprenant l'utilisation d'un moule de coulée selon l'une des revendications 21 à 23.

25. Procédé de coulée à grande échelle comprenant l'utilisation d'un moule de coulée selon l'une des revendications 21 à 23.

26. Procédé pour produire un moule de coulée comprenant la production d'un revêtement de couverture par application et séchage d'au moins une couche d'une composition d'enduit sur au moins une partie de la surface du moule de coulée, où une composition d'enduit selon l'une des revendications 1 à 20 est utilisée.

27. Procédé selon la revendication 26 où, sur au moins une partie de la surface du moule de coulée, tout d'abord au moins une couche d'un revêtement de base est appliquée et où la composition d'enduit est appliquée sur le revêtement de base et éventuellement sur d'autres parties de la surface du moule de coulée.

28. Procédé selon la revendication 27 où, pour la production du revêtement de base, une composition d'enduit selon l'une des revendications 1 à 20 est aussi utilisée.

29. Procédé selon l'une des revendications 26 à 28 où le revêtement de couverture présente une épaisseur de couche sèche d'au moins 0,1 mm, de préférence d'au moins 0,2 mm et de préférence encore de 0,3 mm à 1,5 mm.

30. Procédé selon l'une des revendications 26 à 29 où le revêtement de base présente une épaisseur de couche sèche d'au moins 0,1 mm, de préférence d'au moins 0,2 mm et de préférence encore de 0,3 mm à 1,5 mm.

31. Utilisation d'un moule de coulée selon l'une des revendications 21 à 23 pour la production de tubes, de chemises de cylindres, de moteurs et de composants de moteurs, de bancs de machines et de turbines.
